# EUROPEAN PATENT APPLICATION

(11) **EP 4 207 329 A1**
(43) Date of publication of application: **05.07.2023**
(21) Application number: 21940012.4
(22) Date of filing: 29.10.2021

(54) **SLOW-RELEASE DEVICE FOR BATTERY, AND SECONDARY BATTERY COMPRISING SAME**

(71) Applicant: Contemporary Amperex Technology Co., Limited, Ningde City, Fujian 352100 (CN)
(72) Inventor: SUN, Jingxuan, Ningde, Fujian 352100 (CN); LIU, Qian, Ningde, Fujian 352100 (CN); YE, Yonghuang, Ningde, Fujian 352100 (CN); HE, Jianfu, Ningde, Fujian 352100 (CN); SUN, Xueyang, Ningde, Fujian 352100 (CN); XU, Xiaofu, Ningde, Fujian 352100 (CN)
(74) Representative: Ziebig Hengelhaupt Intellectual Property Attorneys Patentanwaltsanwaltskanzlei PartGmbB
(86) International application number: PCT/CN2021/127529
(87) International publication number: WO 2023/070546

(57) **Abstract**

This application provides a sustained release apparatus for use in a battery, and a secondary battery containing same. The sustained release apparatus includes a first capsule wall and a first to-be-released material. The first capsule wall forms a first closed space. At least a part of the first capsule wall is formed of a first corrodible wall. A part of the first capsule wall other than the first corrodible wall is neither soluble in an electrolytic solution of the battery nor chemically reactive to the electrolytic solution. The first to-be-released material is accommodated in the first closed space. When the first corrodible wall is corroded and broken, the first to-be-released material is released from the first closed space through the first corrodible wall. The electrolytic solution includes a fluorine-containing electrolyte. The first corrodible wall is made from silicate and/or oxide of silicon.

## Description

### TECHNICAL FIELD

This application relates to the technical field of lithium batteries, and in particular, to a sustained release apparatus for use in a battery, and a secondary battery containing same.

### BACKGROUND

In recent years, the application scope of lithium-ion batteries has been expanded. The lithium-ion batteries are widely used in energy storage power systems such as hydro, thermal, wind, and solar power stations, and many other fields such as electric tools, electric bicycles, electric motorcycles, and electric vehicles, military equipment, and aerospace.

However, after the lithium-ion battery is mounted into such electrical devices, performance of the battery in use declines over time, and may even incur a safety hazard. Therefore, persons in the industry have been seeking a method to alleviate performance decline of the battery in long-term use.

### SUMMARY

This application is made in view of the foregoing problems, and aims to provide an apparatus for alleviating performance decline of a battery in long-term use, and especially an apparatus for improving a cycle capacity retention rate of the battery, reducing an internal pressure of the battery, and prolonging a thermal spread time.

To achieve the foregoing objective, this application provides a sustained release apparatus for use in a battery, and a secondary battery containing same.

A first aspect of this application provides a sustained release apparatus for use in a battery. The sustained release apparatus includes a first capsule wall and a first to-be-released material.

The first capsule wall forms a first closed space, at least a part of the first capsule wall is formed of a first corrodible wall, and a part of the first capsule wall other than the first corrodible wall is neither soluble in an electrolytic solution of the battery nor chemically reactive to the electrolytic solution.

The first to-be-released material is accommodated in the first closed space.

When the first corrodible wall is corroded and broken, the first to-be-released material is released from the first closed space through the first corrodible wall.

The electrolytic solution includes a fluorine-containing electrolyte, and the first corrodible wall is made from silicate and/or oxide of silicon.

In this way, by disposing the corrodible wall on the capsule wall of the sustained release apparatus, this application makes the capsule wall break autonomously depending on the degree of wear of the battery, without affecting inherent performance of the battery, so as to release the to-be-released material, and in turn, alleviate or even overcome performance decline of the battery in a later stage of the battery life.

In any embodiment, the silicate is at least one selected from a sodium, potassium, calcium, magnesium, aluminum, or iron salt of silicic acid; and the oxide of silicon is silicon dioxide. By virtue of such arrangement, it is further ensured that, after the battery is worn, the corrodible wall is gradually corroded by reacting with side reaction products of the electrolytic solution.

In any embodiment, the first capsule wall is made from a material selected from: polypropylene (PP), polyethylene (PE), polyethylene terephthalate (PET), polyvinyl chloride (PVC), polycarbonate (PC), polyamide (PA), or polytetrafluoroethylene (PTFE). By virtue of such arrangement, it is ensured that a part of the first capsule wall other than the first corrodible wall is neither soluble in an electrolytic solution of the battery nor chemically reactive to the electrolytic solution.

In any embodiment, a ratio of a surface area of the first corrodible wall to a total surface area of the first capsule wall is (0.005 to 1): 1, optionally (0.01 to 0.5): 1, and further optionally (0.02 to 0.2): 1. By virtue of such arrangement, it is ensured that the to-be-released material can be smoothly released from the sustained release apparatus.

In any embodiment, a thickness of the part of the first capsule wall other than the first corrodible wall is 50 to 1000 µm, optionally 100 to 800 µm, and further optionally 200 to 600 µm. The thickness falling within the foregoing range not only reduces the weight percent of the capsule wall, but also ensures structural reliability of the sustained release apparatus.

In any embodiment, a thickness of the first corrodible wall is not greater than a thickness of the part of the first capsule wall other than the first corrodible wall, and/or a thickness of the first corrodible wall is 10 to 800 µm, optionally 50 to 500 µm, and further optionally 100 to 400 µm. This further ensures that the corrodible wall can release the to-be-released material in a later stage of the battery life.

In any embodiment, an outer surface of the first capsule wall other than the first corrodible wall is further sprayed with a transition metal trapping agent, and optionally, the transition metal trapping agent includes a nitrile additive, and is optionally p-fluorobenzonitrile or p-methylbenzonitrile. In this way, the service life of the battery is further extended.

In any embodiment, the first to-be-released material is at least one of the electrolytic solution, an electrolyte, or an electrolytic solution additive. By means of such arrangement, different to-be-released materials can be accommodated in the first closed space as required.

In any embodiment, the sustained release apparatus further includes at least one capsule wall accommodated in the first closed space and nested in sequence. By means of such arrangement, the effect of stepwise release can be achieved.

In any embodiment, the sustained release apparatus further includes a second capsule wall and a third capsule wall that are accommodated in the first closed space and nested in sequence; and optionally, at least one connecting component is further disposed between the first capsule wall, the second capsule wall, and the third capsule wall to fix the capsule walls relative to each other. Relative rotation between the capsule walls can be prevented by disposing the connecting component between the capsule walls.

In any embodiment, at least a part of the second capsule wall is formed of a second corrodible wall, and optionally, at least a part of the third capsule wall is formed of a third corrodible wall; and the first corrodible wall, the second corrodible wall, and optionally the third corrodible wall are correspondingly disposed on a same side of the sustained release apparatus. The to-be-released material can be released more effectively by disposing the corrodible walls on the same side.

In any embodiment, thicknesses of the first corrodible wall, the second corrodible wall, and optionally the third corrodible wall increase progressively, and/or, surface areas of the first corrodible wall, the second corrodible wall, and optionally the third corrodible wall decrease progressively. This differentiates time intervals of releasing different to-be-released materials.

A second aspect of this application further provides a secondary battery, and a battery cell of the secondary battery contains the sustained release apparatus described herein above.

In any embodiment, the sustained release apparatus may be located above a bare cell of the battery cell, and the first corrodible wall is oriented toward the bare cell. This maximizes the contact area between the to-be-released material and the bare cell.

### BRIEF DESCRIPTION OF DRAWINGS

FIG. 1a is a front view of a sustained release apparatus according to an embodiment of this application;
FIG. 1b is a sectional view of a sustained release apparatus according to an embodiment of this application;
FIG. 2 is a schematic diagram of a sustained release apparatus with three-layer nesting according to an embodiment of this application; and

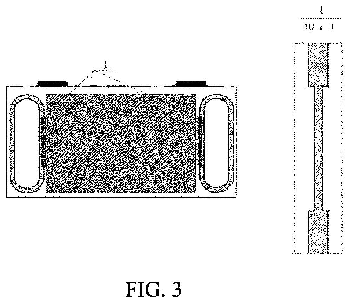

FIG. 3 is a schematic diagram of a location of a sustained release apparatus inside a battery cell of a secondary battery according to an embodiment of this application.

### Reference numerals:

1: First capsule wall;
2: First corrodible wall;
3: First closed space;
4: Second closed space; and
5: Third closed space.

### DETAILED DESCRIPTION OF EMBODIMENTS

The following describes and discloses in detail a sustained release apparatus for use in a battery and a secondary battery containing same according to this application with due reference to drawings. However, unnecessary details may be omitted in some cases. For example, a detailed description of a well-known matter or repeated description of a substantially identical structure may be omitted. That is intended to prevent the following descriptions from becoming unnecessarily long, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by selecting a lower limit and an upper limit. The selected lower and upper limits define the boundaries of the given range. A range so defined may be inclusive or exclusive of the end values, and may be arbitrarily combined. That is, any lower limit may be combined with any upper limit to form a range. For example, if a range of 60 to 120 and a range of 80 to 110 are listed for a given parameter, it is expectable that such ranges may be understood as 60 to 110 and 80 to 120. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, the numerical range "0 to 5" means that all real numbers between 0 and 5 inclusive are listed herein, and the range "0 to 5" is just a brief representation of combinations of such numbers. In addition, when a parameter is expressed as an integer greater than or equal to 2, the expression is equivalent to that the parameter is an integer such as 2, 3, 4, 5, 6, 7, 8, 9, 10, 11, 12, and the like.

Unless otherwise expressly specified herein, all embodiments and optional embodiments hereof may be combined with each other to form a new technical solution.

Unless otherwise expressly specified herein, all technical features and optional technical features hereof may be combined with each other to form a new technical solution.

Unless otherwise expressly specified herein, "include" and "comprise" mentioned herein mean open-ended inclusion, and may also mean closed-ended inclusion. For example, the terms "include" and "comprise" may mean inclusion of other items not listed, or inclusion of only the listed items.

Unless otherwise expressly specified herein, the term "or" is inclusive. For example, the phrase "A or B" means "A alone, B alone, or both A and B." More specifically, the condition "A or B" is satisfied by any of the following: A is true (or existent) and B is false (or absent); A is false (or absent) and B is true (or existent); or, both A and B are true (or existent).

After testing battery performance in a long term, the inventor of this application finds that:
For a lithium battery in long-term use, consumption of an electrolytic solution leads to a performance decline of the battery, and in turn, shortens the service life of the battery and incurs safety hazards. A typical solution to the consumption of the electrolytic solution in the industry is to manually refill the battery with the electrolytic solution externally. However, this solution induces problems such as safety hazards. In addition, a user may be unable to accurately determine the time point of refill, and may prematurely add materials such as the electrolytic solution. The premature adding leads to loss of power and decline of other performance indicators such as electrolyte viscosity or conductivity.

In view of this, based on a lot of experiments, the inventor finds that, by disposing a corrodible structure on a capsule wall of an electrolyte refill apparatus, the corrodible structure can self-destruct according to wear of the battery, so as to release the material out of the capsule. This achieves the effect of automatic electrolyte refill, and can release the to-be-released material stepwise by setting different thicknesses at different positions of the corrodible structure.

The sustained release apparatus according to this application is particularly applicable to a prismatic battery or a pouch-type battery.

The sustained release apparatus according to this application is particularly applicable to alleviating or even solving the problems such as insufficient electrolytic solution, loss of active lithium, large amount of gassing, and thermal runaway in a later stage of the battery cell life.

In view of this, this application discloses a sustained release apparatus for use in a battery. The sustained release apparatus includes a first capsule wall and a first to-be-released material.

The first capsule wall forms a first closed space, at least a part of the first capsule wall is formed of a first corrodible wall, and a part of the first capsule wall other than the first corrodible wall is neither soluble in an electrolytic solution of the battery nor chemically reactive to the electrolytic solution.

The first to-be-released material is accommodated in the first closed space.

When the first corrodible wall is corroded and broken, the first to-be-released material is released from the first closed space through the first corrodible wall.

The electrolytic solution includes a fluorine-containing electrolyte, and the first corrodible wall is made from silicate and/or oxide of silicon.

During the use of a lithium battery, hydrogen fluoride is generated by side reactions of a fluorine-containing electrolytic solution. The hydrogen fluoride corrodes the corrodible wall on the sustained release apparatus, and finally releases materials such as the electrolytic solution contained in the sustained release apparatus, so as to achieve the effect of automatic refill. Without affecting the inherent performance of the battery cell, this practice improves the cycle capacity retention rate and battery life, reduces the internal pressure, shortens duration of thermal runaway, and so on.

In some embodiments, the size of the sustained release apparatus may vary depending on the use environment. The number of sustained release apparatuses is not particularly limited, and primarily depends on the use environment. Generally, for use inside a battery cell of a secondary battery, for example, the sustained release apparatus may be cylindrical, and have a diameter such as 0.5 to 10 mm, optionally 1 to 8 mm, and further optionally 2 to 6 mm. The length of the sustained release apparatus may be 0.5 to 18 cm, optionally 1 to 15 cm, and further optionally 2 to 10 cm. The sustained release apparatus according to the present invention may be disposed by utilizing an internal space of the battery cell without increasing the size of the entire battery cell, thereby improving space efficiency. Especially, when the sustained release apparatus is located in the electrolytic solution, the arrangement can raise a liquid level of the electrolytic solution, improve initial infiltration effect, and alleviate the problem of insufficient infiltration effect of the electrolytic solution in the battery cell that is worn.

In some embodiments, a part of the first capsule wall other than the first corrodible wall is neither soluble in the electrolytic solution of the battery nor chemically reactive to the electrolytic solution. For example, the first capsule wall may be made from a material selected from: polypropylene (PP), polyethylene (PE), polyethylene terephthalate (PET), polyvinyl chloride (PVC), polycarbonate (PC), polyamide (PA), or polytetrafluoroethylene (PTFE). The use of such a capsule wall prevents the battery performance from being affected by the presence of the capsule wall during use of the battery, and prevents the to-be-released material in the capsule wall from being released at an undesired time point.

In some embodiments, the first to-be-released material may be, for example, one or more of the following materials:
an electrolyte, which may be at least one selected from lithium hexafluorophosphate (LiPF₆), lithium tetrafluoroborate (LiBF₄), lithium hexafluoroarsenate (LiAsF₆), lithium bisfluorosulfonimide (LiFSI), lithium bis(trifluoromethanesulfonyl)imide (LiTFSI), lithium trifluoromethanesulfonate (LiFSA), lithium difluorophosphate (LiPO₂F₂), lithium difluoro(oxalato)borate (LiODFB), lithium bis(oxalato)borate (LiBOB), lithium difluoro(bisoxalato)phosphate (LiDODFP), or lithium tetrafluoro(oxalato)phosphate (LiOTFP);
a solvent, which may be one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE);
a flame retardant, which may be a conventional flame retardant used in this field, where the flame retardant may be selected from a halogen-based flame retardant, a phosphorus-based flame retardant, or an inorganic flame retardant; the halogen-based flame retardant may be selected from decabromodiphenylethane, decabromodiphenyl ether, tetrabromobisphenol A, octabromo ether, decabromodiphenylethane, tetrabromo ether, brominated polystyrene, hexabromocyclododecane, chlorinated paraffin, dechlorane plus, or chlorinated polyethylene; the phosphorus-based flame retardant may be selected from melamine polyphosphate, phenoxypolyphosphazene compound, triphenylphosphonate, resorcinol bisphosphonate, bisphenol A bis(diphenyl)phosphonate, bisphenol A bis(dimethyl)phosphonate, tris(2,2-dibromomethyl-3-bromopropylphosphonate), or isopropylated triphenyl phosphate; and the inorganic flame retardant may be selected from aluminum hydroxide, magnesium hydroxide, red phosphorus, ammonium polyphosphate, zinc borate, or antimony oxide;
a lithium supplement additive, which may be selected from Li, LiP, Li₃P, Li₃As, Li₂Se, or lithium silicide powder, where the lithium supplement additive can supplement the lithium lost during use of the battery cell and extend the service life of the battery cell;
a gas absorbent, which may be selected from calcium oxide, calcium hydroxide, alkali lye (such as NaOH/KOH), or the like, where the gas absorbent can reduce the gassing at the end of life (EOL) and the internal pressure and reduce the risk of bursting an explosion-proof valve; and
a transition metal trapping agent, which is optionally a nitrile additive such as p-fluorobenzonitrile or p-methylbenzonitrile.

The foregoing to-be-released materials may be disposed in one or more sustained release apparatuses. Especially, for the purpose of stepwise release, the corrodible walls on different capsule walls of the apparatuses containing different to-be-released materials may vary in thickness. For example, a plurality of sustained release apparatuses differ in that all corrodible walls vary in thickness although identical in area. By means of such arrangement, different to-be-released materials can be released stepwise at different stages of the battery life.

In some embodiments, the first to-be-released material is at least one of the electrolytic solution, an electrolyte, or an electrolytic solution additive. By means of such arrangement, different to-be-released materials can be accommodated in the first closed space as required.

In some embodiments, in a case that the first to-be-released material is an electrolytic solution, the battery cell can be refilled with the electrolytic solution in time at a later stage of the lifetime of the battery that has consumed the electrolytic solution, and the effect of infiltrating electrode plates by the electrolytic solution is enhanced. Such arrangement avoids the problems of lithium plating or even cycle capacity plunging of the battery cell occurring because the electrolytic solution is depleted and the backflow of the electrolytic solution at the central region is deficient under an expansion force. In this way, such arrangement increases the EOL capacity retention rate, extends the battery life, and improves the power performance and fast charge capability, and the like.

In some embodiments, when the first to-be-released material is a solid, the particle size of the to-be-released material is not particularly limited, as long as the to-be-released material can be easily released from the sustained release apparatus. However, for a solid to-be-released material, optionally, the particle size of the to-be-released material is small. Preferably, Dᵥ₅₀ of the to-be-released material is not greater than 1 mm, and optionally not greater than 100 µm. Unless otherwise expressly specified herein, the median diameter Dᵥ₅₀ is determined by the well-known scanning electron microscopy.

In some embodiments, the surface area of the first corrodible wall may be adjusted according to practical environment conditions such as the amount of the fluorine-containing electrolyte, the thickness of the corrodible wall, the number of sustained release apparatuses in use, the size of the battery cell, the available space, and the area and shape of the corrodible wall. In addition, a deficient area of the corrodible wall may affect the release of the to-be-released material. Therefore, optionally, a ratio of a surface area of the first corrodible wall to a total surface area of the first capsule wall may be (0.005 to 1): 1, optionally (0.01 to 0.5): 1, and further optionally (0.02 to 0.2): 1. By virtue of such arrangement, it is ensured that the to-be-released material can be smoothly released from the sustained release apparatus.

In this application, the surface area of the first corrodible wall needs to be understood as a surface area of a side that is of the first corrodible wall and that is away from the first closed space, that is, a surface area of a side that is of the first corrodible wall and that is exposed to the internal space or electrolytic solution of the battery cell. Similarly, the total surface area of the first capsule wall needs to be understood as a total surface area of a side that is of the first capsule wall and that is away from the first closed space.

In some embodiments, the thickness of the first capsule wall may vary in a wide range. When the part of the first capsule wall other than the first corrodible wall is excessively thick, the weight percent of the capsule wall in the entire sustained release apparatus will be excessively high, and space efficiency will be impaired inside the battery cell. When the part of the first capsule wall other than the first corrodible wall is excessively thin, the first capsule wall is at risk of unnecessary unexpected breakage. Therefore, the thickness of the part of the first capsule wall other than the first corrodible wall may be, for example, 50 to 1000 µm, optionally 100 to 800 µm, and further optionally 200 to 600 µm. The thickness falling within the foregoing range not only reduces the weight percent of the capsule wall, but also ensures structural reliability of the sustained release apparatus.

In some embodiments, the first corrodible wall is made from silicate and/or oxide of silicon. Optionally, the first corrodible wall may further include calcium oxide with a weight percent of 1 to 20 wt%, and optionally 5 to 15 wt%, based on the total weight of the first corrodible wall. The term "made from silicate and/or oxide of silicon" used herein means that the first corrodible wall contains not only silicate and/or oxide of silicon, but also other substances. However, the main component is silicate and/or oxide of silicon. For example, the weight percent of silicate and/or oxide of silicon may be not less than 70 wt%, and optionally not less than 80 wt%, based on the total weight of the first corrodible wall.

In some embodiments, the first corrodible wall according to this application may be a thin sheet that is rigid to some extent and made from particles of silicate and/or oxide of silicon in any manner. For example, when necessary, the following ingredients are mixed at a weight ratio and fed into a crucible for melting (at 1320 to 1460 °C): 60% to 80% SiO₂, 1% to 10% Na₂O, 0.5% to 5% CaO, 0.5% to 5% NaCl, 0.01% to 0.5% MgO, 1% to 5% SrO, 1% to 3% B₂O₃, 0.5% to 2% Yb₂O₃; lanthanum oxide, neodymium oxide, and cerium oxide added as additives, each at a weight percent of 0.001% to 0.01%; 0.5% to 5% mica, 0.5% to 5% gaseous silicon dioxide; and silica sol (optionally, with a solid content of 20 wt% to 40 wt%) accounting for the remaining weight percent. The sum of the weight percentages of all ingredients is 100 wt%. Subsequently, the mixture is degassed and defoamed, and then heated until the temperature reaches and stays at 1520 °C to 1590 °C to obtain a clear glass liquid. The glass liquid flows into a tin bath, and is spread flat and thin, and polished to form a glass sheet. Subsequently, the glass sheet is stripped of tin to a desired thickness by using a top roller, and then annealed at 1000 °C to 1200 °C. Finally, the glass sheet is ground, polished, slit, and chemically tempered, and cut into thin sheets. The thickness and shape of the sheets may be adjusted as required. Depending on the material of the capsule wall used herein (for example, polyethylene, with a melting point of 130 °C), the edge of the capsule wall finally fits with the silicate sheet, and connected to the silicate sheet by hot melting.

In some embodiments, the first corrodible wall according to this application is common silicate glass, for example, approximately structured as Na₂O·CaO·6SiO₂.

In some embodiments, the first corrodible wall may be disposed along an outer circumference of the first capsule wall. To be specific, the corrodible wall is in the shape of a ribbon, disposed around the surface of the capsule wall, and connected end to end. Optionally, the first corrodible wall is located at a central position of the capsule wall of the sustained release apparatus. For example, when the sustained release apparatus is in the shape of a column, the first corrodible wall is located at the central position of the column. When the first corrodible wall is corroded and broken, the capsule wall of the sustained release apparatus is divided into two parts that are disconnected from each other, making it easier to release the to-be-released material.

In some embodiments, the thickness of the first corrodible wall may be not greater than the thickness of the part of the first capsule wall other than the first corrodible wall. The thickness is so designed primarily to ensure that the corrodible wall can release the to-be-released material at a later stage of the battery life. Optionally, the thickness of the first corrodible wall may be 10 to 800 µm, optionally 50 to 500 µm, and further optionally 100 to 400 µm.

Although the foregoing thickness values are optional, a person skilled in the art is aware that the thickness of the first corrodible wall may be determined depending on the specific material used, water content in the electrolytic solution, the area of the first corrodible wall, and other factors.

In some embodiments, the silicate may be at least one selected from a sodium, potassium, calcium, magnesium, aluminum, or iron salt of silicic acid; and the oxide of silicon is silicon dioxide. The material of the corrodible wall according to this application can chemically react with a side reaction product hydrogen fluoride (HF) of the electrolytic solution of the battery after the battery is worn, so as to gradually corrode the corrodible wall, and in turn, achieve the effects of identifying the wear status and self-regulation of the battery cell.

In some embodiments, the outer surface area and local roughness of the capsule wall can be increased by means of laser, die-cut mold, acid etching, and the like. Subsequently, the capsule wall is sprayed with a layer of functional agent, such as a transition metal trapping agent, so as to extend the service life of the battery. Therefore, the outer surface of the first capsule wall other than the first corrodible wall may be further sprayed with a transition metal trapping agent. Optionally, the transition metal trapping agent is a nitrile additive such as p-fluorobenzonitrile or p-methylbenzonitrile. Optionally, the weight percent of the trapping agent in the capsule wall may be 0.01 to 8 wt%, optionally 0.05 to 6 wt%, and further optionally 0.1 to 1 wt%. Optionally, the area of the rough region is 0.1% to 10% of the total surface area of the capsule wall, optionally 0.2% to 8%, and further optionally 0.5% to 5%. The size and shape of recesses in the rough region are not particularly limited, as long as it is ensured that the rough region is strong enough. For example, the pressure threshold of the entire rough region is greater than 0.3 MPa, so as to prevent undesired breakage of the rough region. In this way, the service life of the battery is further extended.

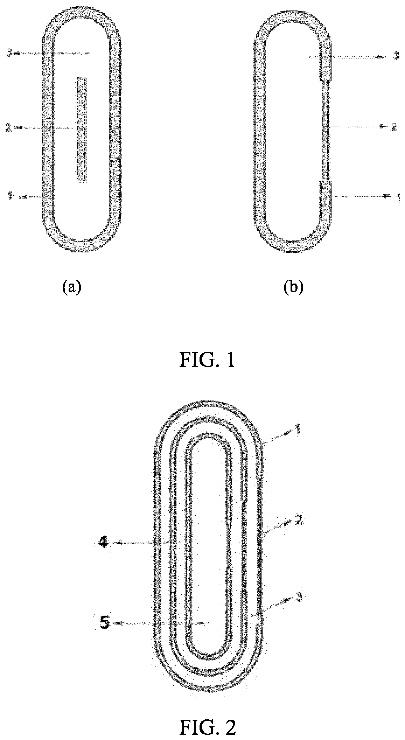

In some embodiments, the sustained release apparatus further includes at least one capsule wall accommodated in the first closed space and nested in sequence. For example, two or three capsule walls are further nested in the first closed space. The multi-layer nested structure achieves the effect that different to-be-released materials are released stepwise at different stages of the battery life, as shown in FIG. 2.

In some embodiments, the sustained release apparatus further includes a second capsule wall accommodated in the first closed space. The second capsule wall forms a second closed space. At least a part of the second capsule wall is formed of a second corrodible wall. A part of the second capsule wall other than the second corrodible wall is neither soluble in an electrolytic solution of the battery nor chemically reactive to the electrolytic solution.

A second to-be-released material is accommodated in the second closed space.

When the second corrodible wall is corroded and broken, the second to-be-released material is released from the second closed space through the second corrodible wall.

The second corrodible wall is made from silicate and/or oxide of silicon.

By virtue of the foregoing structural arrangement, the to-be-released material can still be released stepwise even if the thickness and area of the first corrodible wall are the same as those of the second corrodible wall. Specifically, compared with the practice of using a plurality of independent sustained release apparatuses, such a nested structure can achieve the same effect of stepwise release by using a smaller amount of corrodible wall. For example, in the case that a plurality of identical sustained release apparatuses are disposed independently, when the corrodible walls have the same surface area and thickness, the corrodible walls need to vary in thickness in order to implement stepwise release. In contrast, when a nested structure is applied, the corrodible walls do not need to vary in thickness. In addition, such arrangement can also improve space efficiency of the battery cell.

In some embodiments, the sustained release apparatus further includes a second capsule wall and a third capsule wall that are accommodated in the first closed space and nested in sequence. Optionally, at least one connecting component is further disposed between the first capsule wall, the second capsule wall, and the third capsule wall to fix the capsule walls relative to each other. The connecting component may be a plastic connecting piece that is rigid to some extent. Two ends of the connecting component are connected to different capsule walls. Relative rotation between the capsule walls can be prevented by disposing the connecting component between the capsule walls.

In some embodiments, in a case that two capsule walls are further nested in sequence inside the capsule wall of the sustained release apparatus, at least a part of the second capsule wall is formed of a second corrodible wall, and optionally, at least a part of the third capsule wall is formed of a third corrodible wall. The first corrodible wall, the second corrodible wall, and optionally the third corrodible wall are correspondingly disposed on a same side of the sustained release apparatus. The to-be-released material can be released more effectively by disposing the corrodible walls on the same side.

In some embodiments, thicknesses of the first corrodible wall, the second corrodible wall, and optionally the third corrodible wall increase progressively, and/or, surface areas of the first corrodible wall, the second corrodible wall, and optionally the third corrodible wall decrease progressively. The difference in thickness between the corrodible walls differentiates time intervals of releasing different to-be-released materials, thereby achieving the effect of stepwise release. Furthermore, the surface area of the outermost first corrodible wall is set to be the largest area among all corrodible walls, so as to facilitate the release of the second to-be-released material or, optionally, the third to-be-released material.

In some embodiments, in a case that two capsule walls are further nested in sequence inside the capsule wall of the sustained release apparatus, the first to-be-released material is disposed between the first capsule wall and the second capsule wall, and the second to-be-released material is disposed between the second capsule wall and the third capsule wall. In a case that the third to-be-released material in the third closed space of the third capsule wall is a flame retardant, the third capsule wall may include no corrodible wall, but the third capsule wall needs to be made of a material with a relatively low melting point or softening point, for example, with a melting point or softening point lower than 150 °C, and preferably lower than 130 °C. Under a temperature lower than the melting point or softening point, the capsule wall breaks so as to release the flame retardant.

In some embodiments, the third capsule wall is made of the same material as the second capsule wall and the first capsule wall.

In some embodiments, two capsule walls, that is, a second capsule wall and a third capsule wall, are further nested in sequence inside the first capsule wall of the sustained release apparatus. The electrolytic solution is accommodated between the first capsule wall and the second capsule wall, between the second capsule wall and the third capsule wall, and inside a third closed space formed by the third capsule wall. Specific components of the electrolytic solution may be the same as or different from the electrolytic solution used in the battery cell. The electrolytic solution is sufficient at an early stage of the battery lifecycle, and the sustained release apparatus occupies some space, so that the liquid level of the electrolytic solution is raised to a high level to improve the infiltration effect at the early stage. Subjected to cycling and/or storage continuously, the battery is worn increasingly, and the electrolytic solution keeps being consumed. The side reaction product HF accumulates gradually and keeps reacting with the corrodible wall. The corrodible walls are completely dissolved layer by layer from the outermost layer to the innermost layer, and the electrolytic solution is slowly released stepwise, thereby solving the problems of lithium plating and even cycle capacity plunging of the battery cell occurring because the electrolytic solution is depleted and the backflow of the electrolytic solution at the central region is deficient under an expansion force at a later stage of the battery lifecycle, and in turn, extending the service life of the battery.

In some embodiments, two capsule walls, that is, a second capsule wall and a third capsule wall, are further nested in sequence inside the first capsule wall of the sustained release apparatus. The first to-be-released material between the first capsule wall and the second capsule wall is an electrolytic solution. The second to-be-released material between the second capsule wall and the third capsule wall is a gas absorbent or a lithium supplement additive. The third closed space formed by the third capsule wall accommodates a flame retardant. The electrolytic solution is sufficient at an early stage of the battery life and the sustained release apparatus occupies some space, so that the liquid level of the electrolytic solution is raised to a high level in the battery, and the infiltration effect is good at the early stage. Subjected to cycling and/or storage continuously, the battery is worn increasingly, and the electrolytic solution keeps being consumed. The side reaction product HF accumulates gradually and keeps reacting with the silicate or oxide of silicon of the corrodible wall. The outermost corrodible wall preferentially dissolves completely in the HF and breaks to release the electrolytic solution and compensate for the consumed electrolytic solution. The side reaction product keeps accumulating. The second outermost corrodible wall gradually reacts with the HF until it completely dissolves and breaks, so that the gas absorbent is released to absorb the internal gas effectively. The internal pressure is relieved, and the risk of bursting the explosion-proof valve is reduced. Alternatively, the lithium supplement additive is released to compensate for the lithium consumed at the later stage of the battery life. In a case that dendrites are caused by battery abuse or battery defects or accumulation of lithium plating amount at the end of life, when the dendrites pierce the separator and eventually induce thermal runaway, the temperature instantly increases to the melting point of the material of the capsule wall, and the internal pressure increases sharply and causes the capsule wall to break. In this way, the innermost flame retardant is released to achieve rapid cooling, control severity of the thermal runaway, and enhance safety.

The capsule-shaped sustained release apparatus according to this application can be prepared by a method known in the art. For example, a notched capsule-shaped structure is prepared by a melting and tape-casting method. After a to-be-released material is put into the capsule-shaped structure, the thin sheet made from the silicate and/or oxide of silicon or the like is attached to and seal the notch by hot melting. In a case that a plurality of layers of capsule walls are nested, the capsule walls may be made layer by layer from inside out. For example, the third capsule wall is made first, and then the second capsule wall and the first capsule wall are made in sequence.

In this application, unless otherwise specified, the descriptions on the first capsule wall and the first corrodible wall are also applicable to the second capsule wall, the third capsule wall, and the second corrodible wall and the third corrodible wall. A person skilled in the art understands that, due to the nested structure according to this application, a main difference between the first capsule wall, the second capsule wall, and the third capsule wall lies in the size. To be specific, the first closed space formed by the first capsule wall is larger than the second closed space formed by the second capsule wall, and the second closed space is larger than the third closed space formed by the third capsule wall. Especially, the three capsule walls may have the same settings of the material and thickness of the capsule wall, the percentage of the area of the corrodible wall in the total surface area of the capsule wall, and the material and thickness of the corrodible wall, and the like.

Another aspect of this application further provides a secondary battery, and a battery cell of the secondary battery contains the sustained release apparatus described above.

In some embodiments, the sustained release apparatus may be located in any gap inside the battery cell of the secondary battery as long as the apparatus achieves the objectives of the present invention. For example, the sustained release apparatus may be located around or above the bare cell of the battery cell or in any other gaps. For example, one side of the capsule-shaped sustained release apparatus may be attached to the inner wall of the housing of the battery cell or to the explosion-proof valve by a binder, for example. In this application, for the avoidance of doubt, "above" is understood in the following way: with respect to the bare cell, the side thereof close to the safety valve is above the bare cell.

In some embodiments, the sustained release apparatus may be located above the bare cell of the battery cell of the secondary cell, and the first corrodible wall is oriented toward the bare cell. When the first corrodible wall is broken, the contact area between the to-be-released material and the bare cell is maximized under the action of gravity. In this application, the term "bare cell" is understood as an apparatus that includes a positive electrode plate, a negative electrode plate, a separator, a positive tab, and a negative tab, where the separator is disposed between the positive electrode plate and the negative electrode plate. The positive electrode plate, the separator, and the negative electrode plate are wound, stacked, or folded in half to form the bare cell. The bare cell is further processed, for example, packaged, filled with an electrolytic solution, chemically formed, and degassed, to form a battery cell. The resulting battery cell is directly usable after a protection circuit, a housing, and the like are mounted.

Generally, in a charge-and-discharge cycle of the secondary battery, active ions are shuttled between the positive electrode plate and the negative electrode plate by intercalation and deintercalation. The electrolyte serves to conduct ions between the positive electrode plate and the negative electrode plate. Located between the positive electrode plate and the negative electrode plate, the separator mainly serves to prevent a short circuit between the positive electrode plate and the negative electrode plate, and is penetrable to ions. In this application, unless otherwise specified, the positive electrode plate, negative electrode plate, electrolyte, and separator in the secondary battery are those conventionally used in this field.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

### Embodiments

The following embodiments are intended to describe this application. The embodiments described below are illustrative, and are merely intended to construe this application but not to limit this application. In a case that no specific technique or condition is specified in an embodiment, the techniques or conditions described in the literature in this field or described in the instruction manual of the product may apply. A reagent or instrument used herein without specifying the manufacturer is a conventional product that is commercially available in the market.

### Embodiment 1

### Embodiment 1a

The structure of a sustained release apparatus for use in a secondary battery is shown in FIG. 1a and FIG. 1b. The sustained release apparatus is in the shape of a capsule. The capsule wall is made of a polyethylene film, 400 µm in thickness. The apparatus is 3 mm in diameter, and 6 cm in height, and contains a 4 mm × 20 mm corrodible wall at a central position (accounting for approximately 14% of the total surface area of the capsule wall). The corrodible wall is 100 µm in thickness. The corrodible wall is prepared by the following method (the corrodible walls in subsequent embodiments are prepared by this method):

Mixing the following ingredients at a weight ratio and feeding the ingredients into a crucible for melting (at 1450 °C): 70% SiO₂, 5% Na₂O, 1% CaO, 1% NaCl, 0.1% MgO, 5% SrO, 3% B₂O₃, 1% Yb₂O₃, 0.005% lanthanum oxide added as an additive, 2% mica, 1% gaseous silicon dioxide, and silica sol (purchased from Macklin, model: S888350, with a silica content of 30%±1%) accounting for the remaining weight percent, where the sum of the weight percentages of all ingredients is 100 wt%. Subsequently, degassing and defoaming the mixture, and then heating until the temperature reaches and stays at 1550 °C to obtain a clear glass liquid. The glass liquid flows into a tin bath, and is spread flat and thin, and polished to form a glass sheet. Subsequently, stripping the glass sheet of tin to a desired thickness by using a top roller, and then annealing at 1000 °C. Finally, grinding, polishing, slitting, and chemically tempering the glass sheet, and cutting the glass sheet into thin sheets. Thickness and shape are adjustable as required. Finally, the edge of the corrodible wall is attached to the polyethylene film by hot melting (at a temperature of 140 °C).

A total of 2.4 g of ethylene carbonate is accommodated as a to-be-released material in the closed space of 10 capsule-shaped sustained release apparatuses in the secondary battery.

### Embodiment 1b

The battery is prepared by the same method as in Embodiment 1a, except that the capsule-shaped sustained release apparatus is disposed in the gaps on both sides inside the battery cell.

### Embodiment 2

The structure of the sustained release apparatus is similar to that in Embodiment 1, the sustained release apparatus is in the shape of a capsule, and the capsule wall is made of a polyethylene film 400 µm in thickness. The apparatus is 3 mm in diameter, 5 cm in height, and contains a 2 mm × 10 mm corrodible wall at a central position (accounting for approximately 4% of the total surface area of the capsule wall). The corrodible wall is 150 µm in thickness.

A total of 45 mg of calcium oxide is accommodated as a to-be-released material in the closed space of 12 capsule-shaped sustained release apparatuses in the secondary battery.

### Embodiment 3

The structure of the sustained release apparatus is the same as that in Embodiment 2, the corrodible wall is 300 µm in thickness, and a total of 150 mg of tributyl phosphate is accommodated as a to-be-released material in the closed space of 15 capsule-shaped sustained release apparatuses.

### Embodiment 4

As shown in FIG. 2, the sustained release apparatus is a three-layer nested structure, and is in the shape of a capsule. All three layers of capsule walls are made of a polyethylene film, each being 400 µm in thickness.

The outermost layer is 4 mm in diameter, 8 cm in height, and contains a 4 mm × 20 mm corrodible wall at a central position (accounting for approximately 8% of the total surface area of the capsule wall). The corrodible wall is 100 µm in thickness.

The second outermost layer is 2 mm in diameter, 5 cm in height, and contains a 2 mm × 10 mm corrodible wall at a central position. The corrodible wall is 150 µm in thickness.

The innermost layer is 1 mm in diameter, 3 cm in height, and contains a 1 mm × 5 mm corrodible wall at a central position. The corrodible wall is 200 µm in thickness.

In the 5 capsule-shaped sustained release apparatuses in the secondary battery, the first to-be-released material between the first capsule wall and the second capsule wall is a total of 2.2 g of electrolytic solution (1 mol/L LiPF₆ + EC/DEC/EMC (the weight ratio between EC, DEC, and EMC is 5: 2: 3).

The second to-be-released material between the second capsule wall and the third capsule wall is a total of 80 mg of calcium oxide.

The third to-be-released material in the enclosed space of the third capsule wall is a total of 50 mg of tributyl phosphate.

The corrodible walls in all layers are located on the same side of the sustained release apparatus.

### Embodiment 5

The structure of the sustained release apparatus is similar to that in Embodiment 4, but differs in that the first to-be-released materials in 8 capsule-shaped sustained release apparatuses are a total of 3.5 g of electrolytic solution; the second to-be-released material is a total of 120 mg of calcium oxide; and the third to-be-released material is a total of 80 mg of tributyl phosphate.

### Embodiment 6

This embodiment uses a total of 10 sustained release apparatuses structurally similar to those in Embodiment 1b, and differs in the following aspects: a part of the outermost capsule wall other than the corrodible wall in each sustained release apparatus is etched by laser to roughen a local region of the capsule wall, and then sprayed with a layer of p-fluorobenzonitrile (at a weight percent of 0.4 wt% based on the weight of the capsule wall), and the area of the roughened region is 7% of the total surface area of the capsule wall.

The arrangement of the capsule-shaped sustained release apparatus inside the battery cell is shown in Table 1 below.

### Performance Test

The cycle capacity retention rate at the end of 1000 cycles is tested by the following method:

In a constant-temperature environment of 25 °C, the test is performed within a voltage range of 2.5 to 4.3 V. Charging the battery at a current of 0.5 C until a fully charged state, and then charging the battery at a constant voltage until the current is less than or equal to 0.05 mA, leaving the battery to stand for 5 minutes, and then discharging the battery at a current of 0.5 C until the voltage reaches 2.5 V, and recording the capacity as Dₙ (n = 1, 2, 3...). Repeating the foregoing operations for 1000 cycles (1000 cls), and determining the capacity fading value at the end of each cycle. Using a ratio of Dₙ to D₃ to represent the state of health (SOH) of the battery cell as an indicator of the cycle performance.

Determining the internal pressure (gassing) after 200 days of storage at 60 °C by the following method:
Mounting an internal pressure detection apparatus for the battery cell. Specifically, connecting the electrolyte injection hole on the battery cell to the pressure detection apparatus by using a conduit, and detecting the gas pressure inside the battery cell. Storing the battery cell in a 60 °C environment for 200 days, and recording the internal pressure at the end of the 200 days.

The thermal spread time, that is, the time taken to cause thermal runaway of an adjacent battery cell, is tested by the following method:
Charging the battery cells to a full capacity in a 25 °C constant-temperature environment, and mounting a heating apparatus, with major surfaces of the battery cells arranged side by side. Using a heating plate to heat one of the battery cells until the battery cell is thermally runaway. Checking the time taken to cause thermal runaway of an adjacent battery cell, that is, the thermal spread time.

The size of each prismatic secondary battery used in the performance test is 30×15×100 mm.

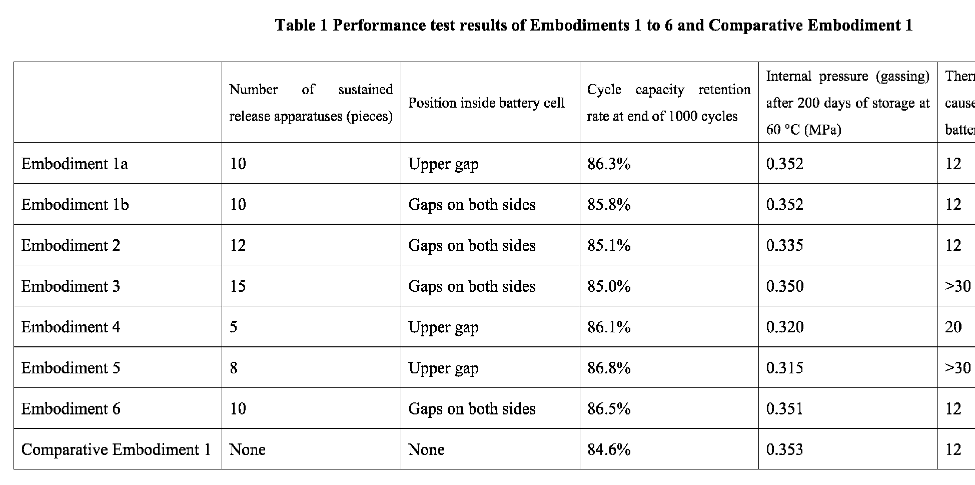

As can be seen from the test results above, all of Embodiments 1 to 6 have achieved good results. Specifically, compared with Comparative Embodiment 1 in the absence of the sustained release apparatus disclosed in the present invention, Embodiments 1 to 6 show that, by using the sustained release apparatus disclosed in the present invention, the cycle capacity retention rate of the battery is improved significantly, the internal pressure of the battery is reduced, and the thermal spread time is extended.

It is hereby noted that this application is not limited to the foregoing embodiments. The foregoing embodiments are merely examples. Any and all embodiments with substantively the same composition or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A sustained release apparatus for use in a battery, wherein the sustained release apparatus comprises a first capsule wall and a first to-be-released material, **characterized in that**,
the first capsule wall forms a first closed space, at least a part of the first capsule wall is formed of a first corrodible wall, and a part of the first capsule wall other than the first corrodible wall is neither soluble in an electrolytic solution of the battery nor chemically reactive to the electrolytic solution;
the first to-be-released material is accommodated in the first closed space;
when the first corrodible wall is corroded and broken, the first to-be-released material is released from the first closed space through the first corrodible wall; and
the electrolytic solution comprises a fluorine-containing electrolyte, and the first corrodible wall is made from silicate and/or oxide of silicon.

2. The sustained release apparatus according to claim 1, **characterized in that** the silicate is at least one selected from a sodium, potassium, calcium, magnesium, aluminum, or iron salt of silicic acid; and the oxide of silicon is silicon dioxide.

3. The sustained release apparatus according to claim 1 or 2, **characterized in that** the first capsule wall is made from a material selected from: polypropylene (PP), polyethylene (PE), polyethylene terephthalate (PET), polyvinyl chloride (PVC), polycarbonate (PC), polyamide (PA), or polytetrafluoroethylene (PTFE).

4. The sustained release apparatus according to any one of claims 1 to 3, **characterized in that** a ratio of a surface area of the first corrodible wall to a total surface area of the first capsule wall is (0.005 to 1): 1, optionally (0.01 to 0.5): 1, and further optionally (0.02 to 0.2): 1.

5. The sustained release apparatus according to any one of claims 1 to 4, **characterized in that** a thickness of the part of the first capsule wall other than the first corrodible wall is 50 to 1000 µm, optionally 100 to 800 µm, and further optionally 200 to 600 µm.

6. The sustained release apparatus according to any one of claims 1 to 5, **characterized in that** a thickness of the first corrodible wall is not greater than a thickness of the part of the first capsule wall other than the first corrodible wall, and/or a thickness of the first corrodible wall is 10 to 800 µm, optionally 50 to 500 µm, and further optionally 100 to 400 µm.

7. The sustained release apparatus according to any one of claims 1 to 6, **characterized in that** an outer surface of the first capsule wall other than the first corrodible wall is further sprayed with a transition metal trapping agent, and optionally, the transition metal trapping agent comprises a nitrile additive, and is optionally p-fluorobenzonitrile or p-methylbenzonitrile.

8. The sustained release apparatus according to any one of claims 1 to 7, **characterized in that** the first to-be-released material is at least one of the electrolytic solution, an electrolyte, or an electrolytic solution additive.

9. The sustained release apparatus according to any one of claims 1 to 8, **characterized in that** the sustained release apparatus further comprises at least one capsule wall accommodated in the first closed space and nested in sequence.

10. The sustained release apparatus according to claim 9, **characterized in that** the sustained release apparatus further comprises a second capsule wall and a third capsule wall that are accommodated in the first closed space and nested in sequence; and optionally, at least one connecting component is further disposed between the first capsule wall, the second capsule wall, and the third capsule wall to fix the capsule walls relative to each other.

11. The sustained release apparatus according to claim 10, **characterized in that** at least a part of the second capsule wall is formed of a second corrodible wall, and optionally, at least a part of the third capsule wall is formed of a third corrodible wall; and the first corrodible wall, the second corrodible wall, and optionally the third corrodible wall are correspondingly disposed on a same side of the sustained release apparatus.

12. The sustained release apparatus according to claim 11, **characterized in that** thicknesses of the first corrodible wall, the second corrodible wall, and optionally the third corrodible wall increase progressively, and/or, surface areas of the first corrodible wall, the second corrodible wall, and optionally the third corrodible wall decrease progressively.

13. A secondary battery, **characterized in that** a battery cell of the secondary battery contains the sustained release apparatus according to any one of claims 1 to 12.

14. The secondary battery according to claim 13, **characterized in that** the sustained release apparatus is located above a bare cell of the battery cell, and the first corrodible wall is oriented toward the bare cell.
